# EUROPÄISCHE PATENTSCHRIFT

(11) **EP 0 772 902 B1**
(45) Veröffentlichungstag und Bekanntmachung des Hinweises auf die Patenterteilung: **21.01.1998**
(21) Anmeldenummer: 95928402.7
(22) Anmeldetag: 20.07.1995
(51) Int. Cl.: H02J 7/02, H02J 7/00

(54) **STROMVERSORGUNGSGERÄT, INSBESONDERE BATTERIE-LADEGERÄT FÜR ELEKTROFAHRZEUGE ODER DERGLEICHEN**
CURRENT SUPPLY APPARATUS, IN PARTICULAR BATTERY-LOADING APPARATUS FOR ELECTRIC VEHICLES OR THE LIKE
APPAREIL D'ALIMENTATION EN COURANT, NOTAMMENT APPAREIL DE CHARGEMENT DE BATTERIES POUR VEHICULES ELECTRIQUES OU SIMILAIRES

(30) Priorität: 22.07.1994 DE 4426017
(43) Veröffentlichungstag der Anmeldung: 14.05.1997
(73) Patentinhaber: Söhner, Walter, 76149 Karlsruhe (DE)
(72) Erfinder: Söhner, Walter, 76149 Karlsruhe (DE)
(74) Vertreter: Zahn, Roland, Dipl.-Ing.
(86) Internationale Anmeldenummer: DE9500985
(87) Internationale Veröffentlichungsnummer: WO9603791

(56) Entgegenhaltungen:
- DE-A- 3 940 928
- FR-A- 2 694 144
- US-A- 4 331 911
- US-A- 4 656 412
- US-A- 5 003 244

## Beschreibung

Die vorliegende Erfindung betrifft ein getaktetes Stromversorgungsgerät mit einem ein- oder mehrsträngigen Netzanschluß zur potentialfreien Erzeugung von Gleichspannungen und im besonderen zum Laden eines einzelnen oder mehrerer Akkumulatoren. Die Erfindung betrifft insbesondere ein Batterie- Ladegerät für Elektrofahrzeuge oder dergleichen.

Allgemein ist davon auszugehen, daß Stromversorgungsgeräte, vor allem solche mit größerer Typenleistung, das Netz nur mit Wirkleistung belasten sollten. Um die Ladezeiten von Batterien mit großer Kapazität klein zu halten, ist man bestrebt, die vom Netz zur Verfügung gestellte Maximalleistung vollständig in Anspruch zu nehmen, wobei die Netzspannungskurvenform durch Rückwirkungen des Netzstroms nicht unzulässig verzerrt werden darf. Bei Batterien, welche aus mehreren in Reihe geschalteten Akkumulatoren bestehen, soll darüber hinaus im allgemeinen eine große Gebrauchsdauer erreicht werden. Vorzeitige Schädigungen und Frühausfälle einzelner Akkumulatoren infolge der in der Praxis immer vorhandenen Kapazitätsunterschiede zwischen den Akkumulatoren sollen dadurch vermieden werden, daß die einzelnen Akkumulatoren bei jedem Ladevorgang jeweils auf dieselbe Spannung gebracht werden. Wenn das Ladegerät während des Entladevorgangs bei der Batterie verbleibt, sollen Kapazitätsunterschiede zwischen den einzelnen Akkumulatoren durch einen ständigen Ladungsausgleich kompensiert werden.

Es ist bekannt, getaktete Stromversorgungsgeräte wegen ihres guten Wirkungsgrades zum Laden von Batterien zu verwenden. Das bekannteste Arbeitsprinzip sieht vor, die Netzspannung mit Dioden und Kondensatoren in eine geglättete Gleichspannung umzuformen. Elektronische Schalter bilden daraus Spannungsimpulse mit einer Frequenz in der Größenordnung von 10kHz bis 100kHz. Mit diesen Impulsen wird dann die Primärwicklung eines geeigneten Transformators beaufschlagt, woraus schließlich in der Sekundärwicklung eine eingeprägte Wechselspannung entsteht, die mittels einer Gleichrichter- und Filterschaltung zur gewünschten Ausgangsspannung geformt wird. Diese Ausgangsspannung wird dann durch eine Regeleinrichtung so geführt, daß sich der gewünschte Ladestrom einstellt (vgl. U. Tietze, Ch. Schenk: "Halbleiterschaltungstechnik", Springer- Verlag, 5. Auflage, 1980, Seite 395 ff.).

Es ist ferner bekannt, daß man bei Geräten mit einphasigem Netzanschluß den Netzstrom nach einer Sinusform führen kann, wenn man die gleichgerichtete Netzspannung mit einem dem Gleichrichter nachgeschalteten Steller mit Spannungserhöhung, oftmals Hochsetzsteller genannt, weiterverarbeitet (vgl. U. Tietze, Ch. Schenk: "Halbleiterschaltungstechnik", Springer- Verlag, 5. Auflage, 1980, Seite 395, sowie M. Herfurth: Aktives Oberschwingungsfilter mit konstanter Betriebsfrequenz und 600W Ausgangsleistung, HL Anwendungsbericht der Fa. SIEMENS, Druckvermerk PD 22 9002). Bei diesem Schaltungsprinzip fließt der gleichgerichtete Netzstrom entweder über eine Drosselspule und einen elektronischen Schalter, wobei die Drosselspule magnetische Energie aufnimmt, oder über die Drosselspule, über eine Sperrdiode und über ein spannungsbestimmendes Element (Kondensator, Batterie), wobei Energie aus der Drosselspule zum spannungsbestimmenden Element überführt wird. Die Ein- und Ausschaltzeiten des elektronischen Schalters werden in Abhängigkeit von der Netzspannungskurvenform so gesteuert, daß sich ein der Sinusform gut angenäherter Netzstrom einstellt; die Netzstromamplitude ergibt sich dabei aus der geforderten Übertragungsleistung. Ein entsprechendes Steuerverfahren ist aus Anleitungen zum Gebrauch von speziellen integnerten Schaltungen bekannt (z. B. Claudio de Sa e Silva: Power Factor Correction With The UC 3854, Applikationsschrift der Fa. UNITRODE).

In Verbindung mit Batterien, die aus mehreren in Reihe geschalteten Akkumulatoren bestehen, ist es bekannt, daß die Abfrage der Summe aus den einzelnen Akkumulatorspannungen zur Bestimmung des Ladezustands wegen der immer vorhandenen Kapazitätsunterschiede zwischen den Akkumulatoren zu unterschiedlichen Ladungszuständen führt. Einzelne Akkumulatoren können unbemerkt in den Zustand der Tiefentladung oder der Überladung kommen und dadurch Schaden nehmen. Wie man solchen Effekten entgegenwirken kann, beschreibt die DE 39 40 928 C1. Danach wird - unter Anwendung des bekannten Sperrwandlerprinzips - der Batterie eine bestimmte Energiemenge pro Zeiteinheit entzogen, die dann dem Akkumulator mit der kleinsten Spannung zufließt. Auf diese Weise ist im zeitlichen Mittel der Entladestrom ladungsschwacher Akkumulatoren kleiner als der von ladungsstarken Akkumulatoren.

Ein Nachteil der getakteten Stromversorgungsgeräte mit über Kondensatoren geglätteter Gleichspannung ist in den von ihnen verursachten impulsförmigen Netzstromverläufen zu sehen. Mit Rücksicht auf die für die Netzzuleitungen vorgeschriebenen Sicherungselemente erreicht man in der Praxis eine Übertragungsleistung, die nur etwa halb so groß ist wie die bei sinusförmigen Strömen nutzbare Maximalleistung des Netzes. Außerdem erzeugen die impulsförmigen Netzströme an den Leitungsimpedanzen Störspannungen, welche den Spannungsverlauf am Netzanschlußpunkt in unerwünschter Weise verzerren und ggf. zu Störungen anderer Verbraucher führen.

Die Anwendung des genannten Hochsetzstellerprinzips hat den Nachteil, daß nur eine Ausgangsspannung erzeugt werden kann, welche immer größer sein muß als der Amplitudenwert der Netzspannung. Eine Potentialtrennung zwischen Netzspannung und Ausgangsspannung ist nicht vorhanden. Bei einem Wechselspannungsnetz mit einem Spannungseffektivwert von 230V beträgt der Amplitudenwert der Netzspannung 325V. Eine potentialfreie Ausgangsspannung, die kleiner ist als der Amplitudenwert der Netzspannung kann somit nur erzeugt werden, wenn die Eingangsspannung des Hochsetzstellers durch einen Netztransformator reduziert wird. In der Regel muß ein Stromversorgungsgerät mehrere Ausgangsspannungen bereitstellen, die im Bereich von etwa 5V bis 100V liegen. Es ist sehr aufwendig, für jede zu erzeugende Ausgangsspannung einen separaten Hochsetzsteller mit einem Netztransformator vorzusehen. Fahrzeugbatterien haben in der Regel eine Nennspannung unter 250V. Bei Ladegeräten für Fahrzeugbatterien soll die Ladeleistung groß sein, und es wird oftmals eine Potentialtrennung vorgeschrieben. Somit muß ein Ladegerät nach dem Hochsetzstellerprinzip mit einem Netztransformator ausgerüstet werden, welcher jedoch das Gewicht und das Bauvolumen des Ladegeräts erheblich vergrößert.

Gemäß einem Ausführungsbeispiel der DE 39 40 928 C1 wird zur Verwirklichung des Ladungsausgleichs ein einziger Speichertransformator verwendet, der für jeden Akkumulator eine Sekundärwicklung aufweist. Diese Anordnung hat den Nachteil, daß die Sekundärwicklungen untereinander und mit der Primärwicklung in gleicher Weise verkoppelt sein müssen, um den gewünschten Effekt zu erzielen. Die Realisierung eines solchen Transformators wird um so schwieriger, je mehr Akkumulatoren überwacht werden sollen. Außerdem ist die Anzahl der Akkumulatoren durch die vorhandenen Sekundärwicklungen festgelegt. Ein anderes aus der DE 39 40 928 C1 bekanntes Schaltungsprinzip ordnet jedem Akkumulator einen separaten Sperrwandler zu. In diesem Fall ist jedoch der Aufwand an Bauteilen sowohl für die Leistungselektronik als auch für die Signalverarbeitung groß. Die Schaltungen der DE 39 40 928 C1 betreffen lediglich den Ladungsausgleich zwischen den Akkumulatoren einer Batterie; ein Laden der Batterie selbst ist nicht vorgesehen.

US - A - 4 656 412 offenbart ein getaktetes Stromversorgungsgerät für einsträngigen Netzanschluß mit einem eingangsseitigen Gleichrichter, einem Steller zur Erzeugung einer Folge von Spannungsimpulsen, einer Spannungsbegrenzungsschaltung, einem Anpaßnetzwerk mit einem Transformator und Sperrdioden, einem aus einer Drosselspule und einem Kondensator bestehenden Filter zum Anschluß an ein spannungsbestimmendes Element und einem Steuergerät. Die Spannungsbegrenzungsschaltung weist als wesentliche Bestandteile eine Drosselspule, einen Kondensator und einen Transformator mit sättigbarem Kem auf. Sie begrenzt dauernd die Amplituden der vom Steller gelieferten Spannungsimpulse. Ihre Wirkung gründet auf Resonanzeffekten in elektrischen Schwingkreisen. Die Erzielung eines Ladungsausgleichs zwischen mehreren Batterieblöcken ist mit einer derartigen Anordnung nicht möglich, da beim Arbeitsprinzip der Spannungseinprägung unterschiedliche Spannungen der Ausgangskanäle zu großen Ausgleichsströmen zwischen den Ausgangskanälen führen, was die gezielte Aufteilung der Ladeleistung auf die Ausgangskanäle erschwert.

Ausgehend von diesem Stand der Technik liegt der Erfindung die Aufgabe zugrunde, ein Stromversorgungsgerät zu schaffen, welches aus einem ein- oder mehrsträngigen Netz unter Vermeidung unerwünschter Stromoberschwingungen nur Wirkleistung bezieht, das keinen Netztransformator benötigt und eine oder mehrere potentialgetrennte Ausgangsspannungen erzeugen kann, und das bei einem Einsatz als Batterieladegerät sowohl während des Ladens, als auch während des Entladens der Batterie für einen ständigen Ladungsausgleich zwischen den einzelnen Akkumulatoren der Batterie sorgt.

Diese Aufgabe wird erfindungsgemäß durch die in Anspruch 1 angegebenen Merkmale gelöst.

Die generellen Vorteile dieser Anordnung bestehen darin, daß die Anpaßtransformatoren eine Potentialtrennung zwischen den einzelnen Ausgängen und dem Netz gewährleisten. Dadurch kann entweder nur ein Verbraucher oder mehrere Verbraucher, die untereinander keine galvanische Verbindung haben sollen, oder mehrere in Reihe geschaltete Verbraucher versorgt werden. Die Anpassung der Ausgangsspannungen geschieht in einfacher Weise durch die Wahl der Übersetzungsverhältnisse der Anpaßtransformatoren. Ein Netztransformator ist nicht notwendig. Wegen der großen Taktfrequenz des Stellers kann das Bauvolumen der Anpaßtransformatoren klein gehalten werden. Eine geeignete Wahl der Ein- und Ausschaltzeiten der elektronischen Schalter erlaubt die Führung des Netzstroms in Form einer Sinusfunktion und ermöglicht es dadurch, große Leistungen aus dem Netz zu beziehen. Insbesondere kann die an einer Haushaltssteckdose verfügbare Leistung von ca. 3,3 kW ausgenutzt werden. Es werden keine Netzspannungsverzerrungen durch niederfrequente Oberschwingungen im Netzstrom verursacht. Durch den modularen Aufbau kann ein erfindungsgemäßes Gerät jederzeit an verschiedene Versorgungsaufgaben angepaßt werden. Vor allem zum Laden von Batterien werden mehrere gleichartige Anpaßnetzwerke benötigt, die jeweils für die Ladeleistung eines Akkumulators zu bemessen sind. Man kommt deshalb in der Regel mit leicht verfügbaren und preisgünstigen Bauelementen aus. Die Verwendung mehrerer gleichartiger Bauelemente bietet für die Gerätefertigung Rationalisierungsvorteile.

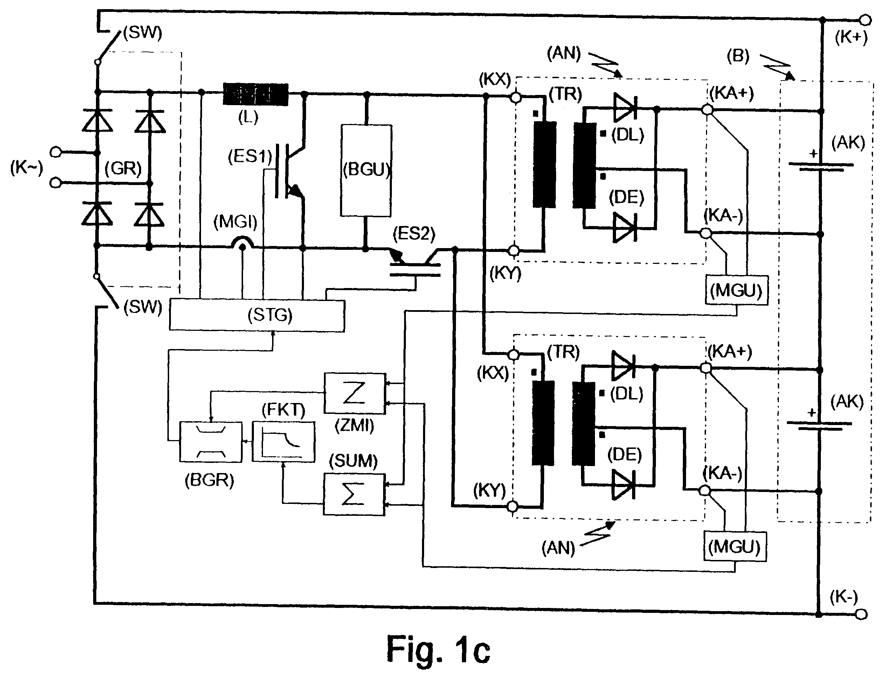

Eine erfindungsgemäße Anordnung kann gleichermaßen zur Erzeugung von Gleichspannungen, als Ladegerät für Akkumulatoren und zum Ladungsausgleich zwischen mehreren Akkumulatoren eingesetzt werden. Zur Erzeugung von Gleichspannungen werden an die Ausgangsklemmen Kondensatoren als spannungsbestimmende Elemente angeschlossen. Es wird eine einzige Ausgangsspannung gemessen und über eine der Drosselstromregelung überlagerte Spannungsregelung einem vorgegebenen Sollwert nachgeführt. Da immer dem am meisten belasteten Ausgang bzw. den am meisten belasteten Ausgängen Energie zugeführt wird, werden die nicht gemessenen restlichen Ausgangsspannungen - ähnlich wie bei einem Sperrwandler - indirekt mitgeregelt. Sie stellen sich im wesentlichen gemäß den Übersetzungsverhältnissen der einzelnen Anpaßtransformatoren ein. Zur Ladung von Akkumulatoren werden diese direkt an die Ausgangsklemmen angeschlossen. Zur Kompensation des induktiven Innenwiderstands eines Akkumulators kann parallel zum Akkumulator noch ein Kondensator geschaltet werden. In der ersten Phase eines Ladevorgangs werden die Akkumulatoren - beginnend mit demjenigen Akkumulator, dessen Spannung am kleinsten ist - sukzessive auf den) selben Spannungswert gebracht. In der zweiten Phase werden die Akkumulatoren bei jeweils gleicher Spannung und ohne Überladung einzelner Akkumulatoren bis zur Ladeschlußspannung vollständig geladen. Auf diese Weise wird sichergestellt, daß jeder Akkumulator die seiner Kapazität entsprechende Maximalladung erreicht. Schädliche Überladungen werden vermieden, wodurch die Gebrauchsdauer einer Batterie verlängert wird. Eine Batteriewartung in Form einer regelmäßigen Messung der Akkumulatorenspannungen und in Form von gezielten Ladungen oder Entladungen einzelner Akkumulatoren entfällt. Die zulässige Ladeleistung eines Akkumulators kann in einfacner Weise eingehalten werden, wenn das Steuergerät die Anzahl der Akkumulatoren mit der kleinsten Spannung ermittelt und dem Steller eine Ladeleistung vorgibt, welche der ermittelten Anzahl multipliziert mit der zulässigen maximalen Ladeleistung eines einzelnen Akkumulators entspricht. Wegen der Parallelschaltung der Anpaßnetzwerke am Ausgang des Stellers kann das Gerät jederzeit an die Anzahl der Akkumulatoren angepaßt werden. Bei Entladevorgängen können mit der erfindungsgemäßen Anordnung kapazitätsarme Akkumulatoren in vorteilhafter Weise gestützt werden. Wenn die Netzspannung fehlt und die Schalter SW geschlossen sind (vgl. Fig.1c), kann der Steller aus der Batterie gespeist werden. Die der Batterie entnommene Energie gelangt zum schwächsten bzw. zu den schwächsten Akkumulatoren. Dadurch werden die einzelnen Akkumulatoren im zeitlichen Mittel mit einem Entladestrom beaufschlagt, der ihrer Kapazität entspricht, und es wird sichergestellt, daß alle Akkumulatoren jederzeit denselben Ladezustand haben.

Wegen der unvermeidlichen Streuinduktivitäten der Anpaßtransformatoren dauert es eine bestimmte Zeit, bis der vom Steller abgegebene Stromimpuls vollständig auf die Primärwicklungen der Anpaßnetzwerke übergegangen ist. Deshalb sind die Anpaßtransformatoren mit möglichst geringen Streuinduktivitäten auszuführen. Solange der Übergang nicht abgeschlossen ist, wird die Differenz aus dem vom Steller abgegebenen Stromimpuls und dem zu den Primärwicklungen fließenden Strom von einer Spannungsbegrenzung aufgenommen. Die zur Spannungsbegrenzung übertragene Energie kann zur Verbesserung des Wirkungsgrades durch geeignete Ausgestaltung der Spannungsbegrenzung ganz oder teilweise zurückgewonnen werden.

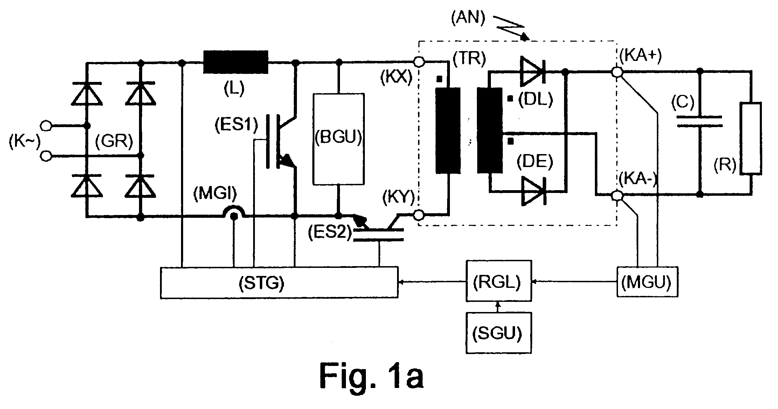

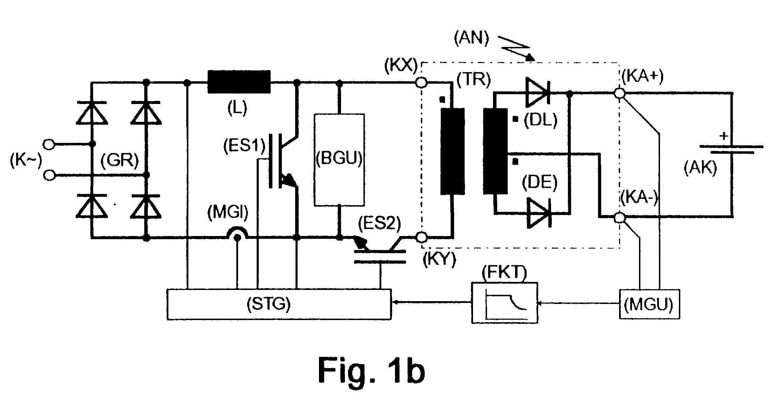

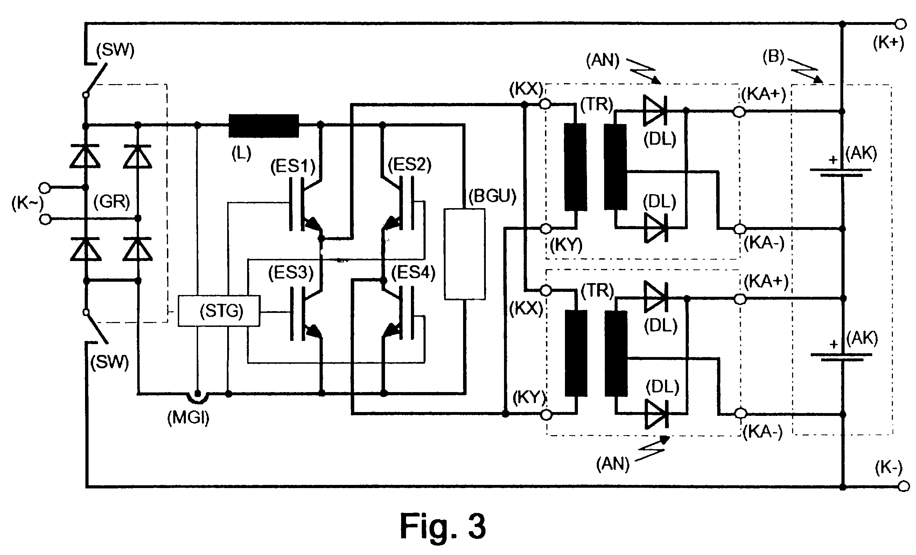

Bei einer weiteren Ausgestaltung der Erfindung (vgl. Fig.3) wird die Drosselspule am Netzgleichrichter und an einer mit vier elektronischen Schaltem aufgebauten Brückenschaltung angeschlossen. deren Wechselstromanschlüsse zu den parallel geschalteten Primärwicklungen der Anpaßtransformatoren führen. Diese Schaltung hat die gleichen prinzipiellen Eigenschaften wie die Grundschaltung nach Fig.1a/1b/1c und bietet den zusätzlichen Vorteil, daß die Sekundärwicklungen und die Sperrdioden im zeitlichen Mittel gleichmäßig belastet werden, was sich günstig auf die Bemessung des Leiterquerschnitts für die Sekundärwicklungen und auf die Bemessung der Sperrdioden auswirkt. Grundsätzlich besteht die Wahl, ob die Transformatorkeme während des Ladens der Drosselspule entmagnetisiert werden oder ob bei der Übertragung eines Stromimpulses eine Ummagnetisierung stattfindet. Wenn die Transformatoren zu Beginn der Übertragung eines Stromimpulses entmagnetisiert sind, ist die von den Streuinduktivitäten der Anpaßtransformatoren verursachte Zeit bis zum vollständigen Übergang des Stromimpulses auf die Anpaßnetzwerke kürzer und die Belastung der Spannungsbegrenzung geringer als wenn während der Übertragung eines Stromimpulses eine Ummagnetisierung der Transformatorkeme erfolgt. Die Ummagnetisierung hat aber den Vorteil, daß die Transformatorkeme im sog. Gegentaktbetrieb mit unterschiedlichem Vorzeichen magnetisiert werden können, wodurch ein größerer Induktionshub verfügbar ist. Man kommt in diesem Fall mit weniger Kernmaterial aus. Bauteile, die nur zur Entmagnetisierung der Transformatoren dienen, sind in der Schaltung nach Fig.3 nicht notwendig.

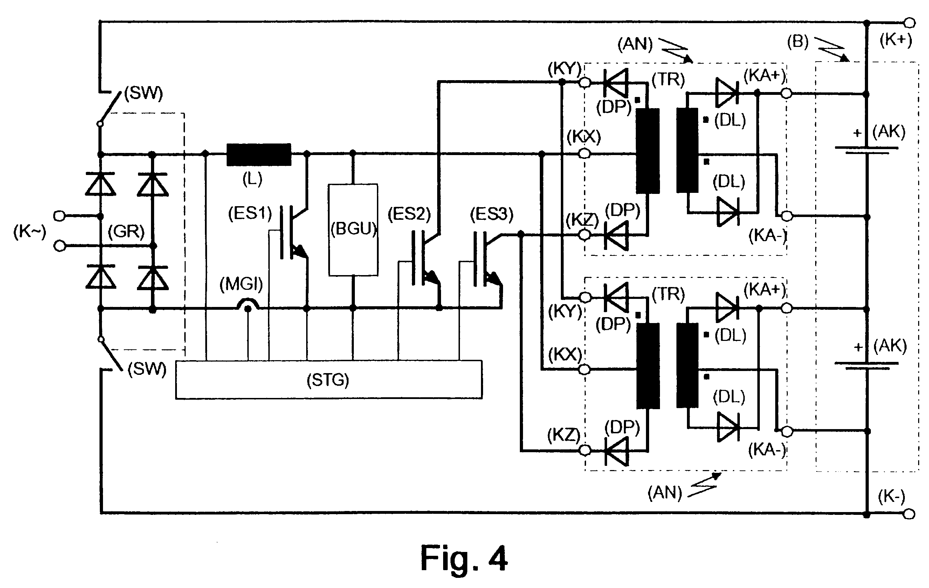

Bei einer weiteren Ausgestaltung der Erfindung (vgl. Fig.4) sind Anpaßtransformatoren vorgesehen, die eine Primärwicklung mit einer Mittelanzapfung haben. Zur Vermeidung unerwünschter Ausgleichsströme zwischen den Primärwicklungen mehrerer Anpaßnetzwerke können in Reihe mit jeder Wicklungshälfte Dioden DP als zusätzliche Bestandteile der Anpaßnetzwerke geschaltet sein. Jedes Anpaßnetzwerk hat drei Eingangsklemmen KX, KY, KZ und ist an diesen mit allen anderen Anpaßnetzwerken parallelgeschaltet. Die vom Steller erzeugte Folge von Stromimpulsen wird am gemeinsamen Anschlußpunkt aller Mittelanzapfungen KX eingespeist. Die über Dioden zu den Wicklungsenden führenden Klemmen KY und KZ sind mit jeweils einem elektronischen Schalter verbunden. Diese Schaltung hat dieselben prinzipiellen Eigenschaften wie die Schaltung nach Fig.3, kommt aber mit nur drei elektronischen Schaltem aus, wobei alle elektronischen Schalter zur Vereinfachung der Ansteuerung auf ein gemeinsames Bezugspotential gelegt werden können. Ausgleichsströme zwischen den Anpaßtransformatoren können verhindert werden, was für den Betrieb von Geräten mit vielen oder räumlich weit voneinander entfemten Anpaßnetzwerken vorteilhaft ist.

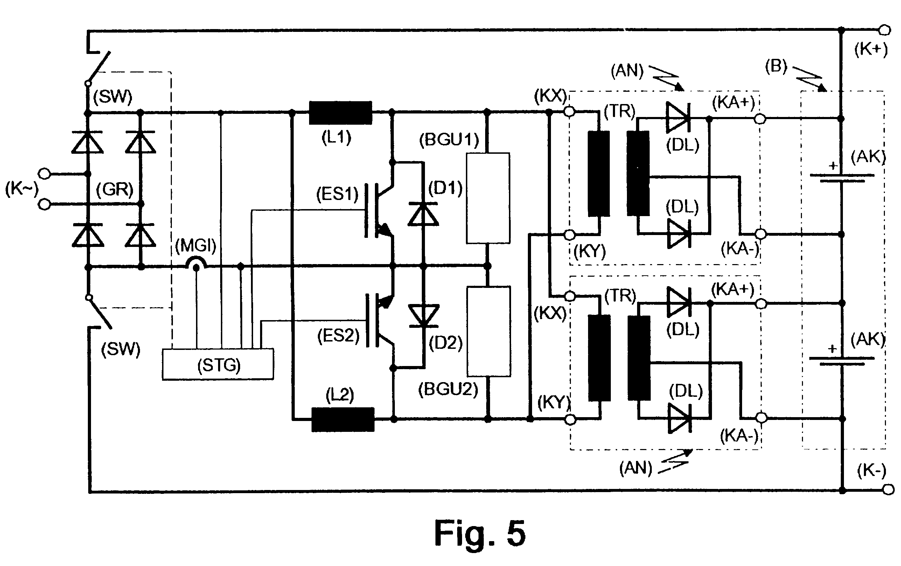

Eine weitere Ausgestaltung der Erfindung (vgl. Fig.5) sieht zwei Drosselspulen L1, L2 vor, die jeweils einerseits mit dem Netzgleichrichter GR und andererseits mit einem Anschluß der parallelgeschalteten Anpaßtransformatoren sowie einem elektronischen Schalter verbunden sind. Solange ein elektronischer Schalter eingeschaltet ist, wird die ihm zugeordnete Drosselspule geladen. Zur Übertragung eines Stromimpulses an die Anpaßnetzwerke muß ein elektronischer Schalter aus- und der andere eingeschaltet sein. Die beiden elektronischen Schalter werden um 180° versetzt getaktet. Man erhält dann zwei Folgen von Stromimpulsen, welche die Primärwicklungen der Anpaßtransformatoren in unterschiedlicher Richtung beaufschlagen, wobei sich Gegentaktbetrieb einstellt. Diese Schaltung bietet gegenüber den bisher beschriebenen Anordnungen nach Fig.1a/1b/1c und Fig.3 den Vorteil, daß die Aufteilung des Leistungsflusses auf zwei Drosselspulen und zwei versetzt getaktete elektronische Schalter bei gleichen Induktivitätswerten der Drosselspulen und gleicher Taktfrequenz der elektronischen Schalter eine Reduktion der Störwelligkeit des Netzstroms zur Folge hat, wodurch Filterelemente zur Unterdrückung von Netzstromkomponenten mit Taktfrequenz kleiner dimensioniert werden können. Gegenüber einer Drosselspule, welche für die gesamte Geräteleistung auszulegen ist, kann die Verwendung zweier Drosselspulen mit halber Strombelastung konstruktive Vorteile bieten. Der Gegentaktbetrieb erlaubt kleine Transformatorkeme. Außerdem kommt man mit zwei elektronischen Schaltem aus, die am selben Bezugspotential angeschlossen sind, was die Ansteuerung der elektronischen Schalter erleichtert.

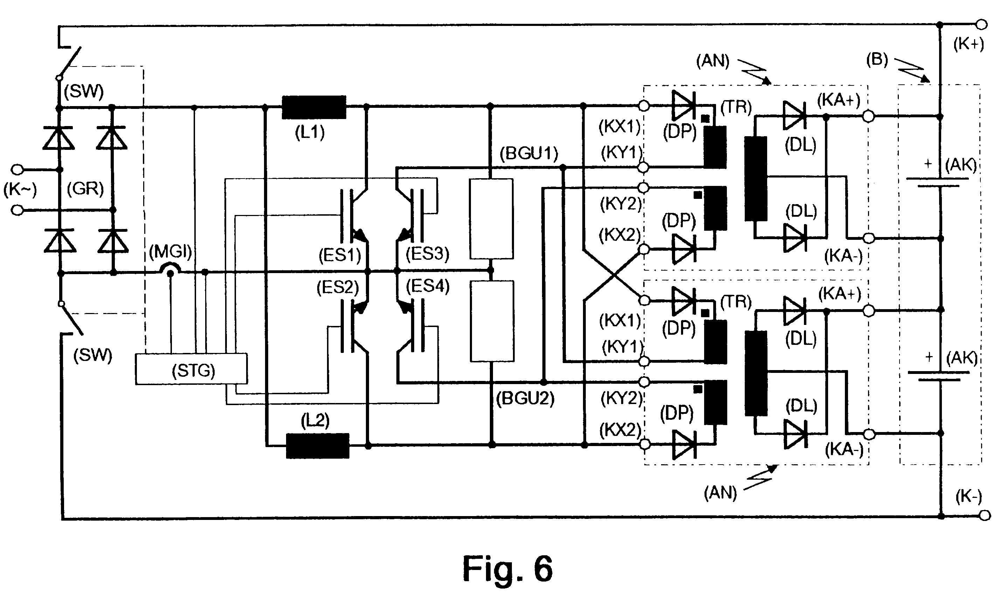

Eine weitere Ausgestaltung der Erfindung (vgl. Fig.6) sieht zwei an den Ausgangsklemmen des Gleichrichters parallel geschaltete Grundschaltungen vor, welche Energie jeweils über eine von zwei getrennten Primärwicklungen in die einzelnen Anpaßtransformatoren TR einspeisen. Zur Vermeidung von Ausgleichsströmen zwischen den Anpaßtransformatoren können in Reihe mit jeder Primärwicklung Dioden DP als Bestandteil des jeweiligen Anpaßnetzwerks geschaltet sein. Die beiden Grundschaltungen werden jeweils um 180° versetzt getaktet. Diese Schaltung hat alle bei den Schaltungen nach Fig.1a/1b/1c, Fig.3 und Fig.5 genannten Vorteile. Alle elektronischen Schalter befinden sich auf demselben Bezugspotential, was ihre Ansteuerung erleichtert. Die Unterdrückung von Ausgleichsströmen durch Dioden in Reihe zu den Primärwicklungen der Anpaßtransformatoren ist für den Betrieb von Geräten mit vielen oder räumlich weit voneinander entfemten Anpaßnetzwerken vorteilhaft.

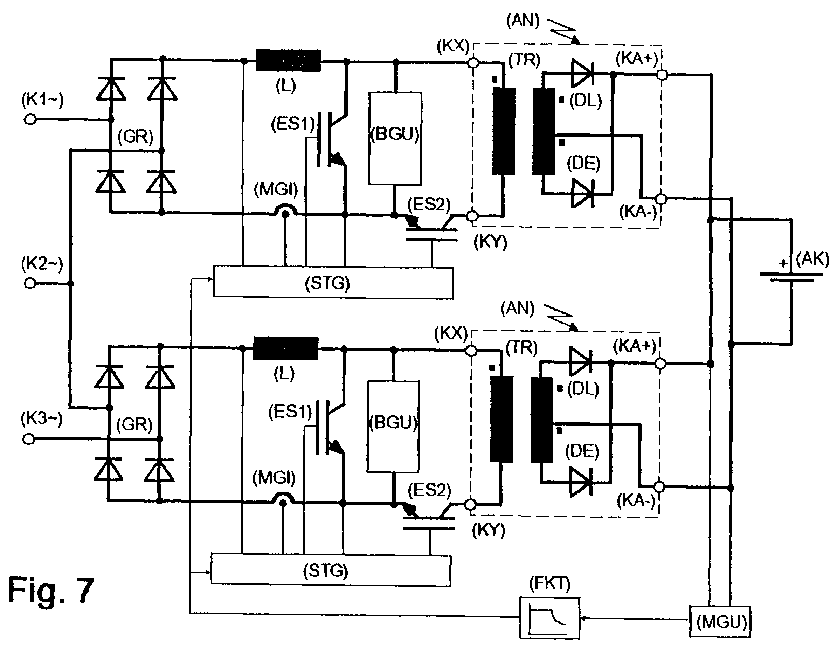

Für dreisträngigen Netzanschluß wird die Aufgabe erfindungsgemäß dadurch gelöst, daß man zwei der oben beschriebenen Schaltungen an den Ausgangsklemmen parallelschaltet, daß man je einen Wechselspannungsanschluß eines der beiden Gleichrichter mit einer Netzklemme verbindet, daß man die beiden restlichen Anschlüsse der Gleichrichter an die verbleibende Netzklemme schaltet, und daß der Netzstrom eines jeden Gleichrichters mit Hilfe der beiden Steuergeräte so geführt ist, daß er in Phase zu den an den Wechselspannungsklemmen des Gleichrichters anliegenden Netz- Leiterspannung verläuft (vgl. Fig.7).

Die Kombination zweier gleicher Einheiten vereinfacht die Herstellung von Geräten mit dreisträngigem Netzanschluß. Zusammen mit standardisierten Anpaßnetzwerken können die Geräte leicht an unterschiedliche Anforderungen bezüglich Anzahl und Wert der Ausgangsspannungen sowie der Geräteleistung angepaßt werden. Besonders bei großen Leistungen kann die Aufteilung der Leistung in leistungsschwächere Komponenten zur Nutzung leichter verfügbarer oder preisgünstigerer Bauelemente vorteilhaft sein. Da der Netzmittelpunkt nicht angeschlossen ist, bewirkt die Führung zweier Netzströme nach einer Sinusform auch im dritten Netzstrang einen sinusförmigen Strom. Das Netz wird somit nur mit Wirkleistung belastet.

Im weiteren wird die Erfindung anhand der Zeichnung näher erläutert. Es zeigt
Fig.1a ein Prinzipschaltbild für die Grundschaltung zur Erzeugung einer Ausgangsgleichspannung;
Fig.1b ein Prinzipschaltbild für die Grundschaltung zum Laden eines Akkumulators;
Fig.1c ein Prinzipschaltbild für die Grundschaltung zum Laden einer Batterie, die aus zwei in Reihe geschalteten Akkumulatoren besteht;
Fig.2 ein Ausführungsbeispiel für den Leistungsteil der Grundschaltung;
Fig.3 ein Prinzipschaltbild für eine Schaltung mit einer Drosselspule und vier elektronischen Schaltem in Brückenschaltung;
Fig.4 ein Prinzipschaltbild für eine Schaltung mit einer Drosselspule und drei elektronischen Schaltern;
Fig.5 ein Prinzipschaltbild für eine Schaltung mit zwei Drosselspulen und zwei elektronischen Schaltern;
Fig.6 ein Prinzipschaltbild für eine Schaltung mit zwei Drosselspulen und vier elektronischen Schaltem;
Fig.7 ein Prinzipschaltbild für eine Schaltung mit dreisträngigem Netzanschluß;
Fig.8 ein weiteres Ausführungsbeispiel für ein Anpaßnetzwerk.

In der Grundschaltung zur Erzeugung einer Ausgangsspannung nach Fig.la wird die Netzspannung an die Netzanschlußklemmen K- angelegt und mit einem aus vier Dioden bestehenden Gleichrichter GR gleichgerichtet. Eine Drosselspule L bildet zusammen mit den beiden im Kilohertzbereich alternierend ein- und ausgeschalteten elektronischen Schaltem ES1, ES2 (z. B. IGB- Transistoren) und einer Spannungsbegrenzung BGU einen Steller mit geschaltetem Ausgang. Der Steller ist mit den Klemmen KX und KY eines Anpaßnetzwerks AN verbunden. Es besteht aus einem Anpaßtransformator TR und Sperrdioden DL ("Ladediode") und DE ("Entmagnetisierungsdiode"), welche einen Rückstrom zum Anpaßnetzwerk AN verhindern. Die Primärwicklung des Anpaßtransformators TR ist mit den Klemmen KX und KY verbunden. An den Ausgangsklemmen KA+, KA- des Anpaßnetzwerks AN sind ein Kondensator C als spannungsbestimmendes Element und ein Verbraucher R angeschlossen. Der Kondensator C puffert die über das Anpaßnetzwerk AN an den Verbraucher R gelieferte Energie. Die Steuersignale für die elektronischen Schalter ES1, ES2 kommen von einem Steuergerät STG. Wenn der elektronische Schalter ES1 leitet, liegt an der Drosselspule L die gleichgerichtete Netzspannung an, wobei die Drosselspule magnetische Energie aufnimmt. Der elektronische Schalter ES2 sperrt während dieser Zeit, so daß die während der vorhergehenden Taktperiode im Kern des Anpaßtransformators TR gespeicherte magnetische Energie zum Ausgang überführt wird. Während der Entmagnetisierung fließt ein Strom durch die Sperrdiode DE, die Klemme KA+ zum Kondensator C sowie zum Verbraucher R und von dort über die Klemme KA- zur Mittelanzapfung der Sekundärwicklung zurück. Er nimmt infolge der Spannung am Kondensator C zeitlich linear ab. Das Zeitintervall, während dem der elektronische Schalter ES1 leitet und der elektronische Schalter ES2 sperrt, ist vorzugsweise größer oder gleich lang wie die halbe Taktperiode und wird in Abhängigkeit vom Netzstromsollwert eingestellt. Anschließend wird bis zum Ende der Taktperiode der elektronische Schalter ES1 aus- und der elektronische Schalter ES2 eingeschaltet. Die Drosselspule L prägt dann einen Stromimpuls ein, der über die Primärwicklung des Anpaßtransformators TR fließt. Er teilt sich nach einer anfänglichen, von der Größe der Streuinduktivitäten des Anpaßtransformators TR abhängigen Verzögerungszeit in einen Anteil auf, der zur Magnetisierung des Anpaßtransformators TR dient, und in einen Anteil, der dem in der Sekundärwicklung induzierten Strom entspricht. Dieser fließt über die Sperrdiode DL, die Klemme KA+ zum Kondensator C sowie zum Verbraucher R und von dort über die Klemme KA- zur Mittelanzapfung der Sekundärwicklung. Solange über die Sperrdiode DL ein Strom fließt, wird ein Teil der in der Drosselspule L gespeicherten Energie zum Kondensator C sowie zum Verbraucher R übertragen, wobei die Spannung an der Primärwicklung und am elektronischen Schalter ESI gleich der Kondensatorspannung multipliziert mit dem Verhältnis der Windungszahlen von Primär- zu Sekundärwicklung ist. Durch wiederholtes Ein- und Ausschalten der elektronischen Schalter ESI, ES2 wird die Parallelschaltung aus dem Kondensator C und dem Verbraucher R mit einer Folge von Stromimpulsen beaufschlagt. Wenn deren Energie im zeitlichen Mittel gleich groß ist wie die vom Verbraucher R umgesetzte Energie, ist die Kondensatorspannung näherungsweise konstant. Letztere wird mit einem potentialtrennenden Spannungsmeßgeber MGU gemessen und mit Hilfe einer Regelschaltung RGL nachgeführt. Die Regelschaltung RGL gibt dem Steuergerät STG in Abhängigkeit von der gemessenen Kondensatorspannung und dem mit einem Sollwertgeber SGU vorgegebenen Sollwert für die Kondensatorspannung die zur Aufrechterhaltung der Kondensatorspannung erforderliche Netzstromamplitude (oder gleichbedeutend die Übertragungsleistung) vor. Das Steuergerät STG mißt den Ausgangsstrom des Gleichrichters GR, der dem Strom durch die Drosselspule L entspricht, mittels eines Strommeßwertgebers MGI und bestimmt die Ein- und Ausschaltsignale für die elektronischen Schalter ES1, ES2 derart, daß der Strom durch die Drosselspule L analog dem Betrag einer Sinusfunktion verläuft. Der Netzstrom ist dann sinusförmig. Wenn der elektronische Schalter ES1 aus- und der elektronische Schalter ES2 eingeschaltet wird, steigt der Strom in der Sekundärwicklung und ebenso der ihm entsprechende Stromanteil in der Primärwicklung wegen der unvermeidlichen Streuinduktivitäten des Anpaßtransformators TR nicht sprungförmig, sondern rampenförmig an. Die Differenz zwischen dem vom der Drosselspule L eingeprägten Stromimpuls und dem Strom durch die Primärwicklung wird von einer Spannungsbegrenzung BGU aufgenommen. Je kleiner die Streuinduktivitäten des Anpaßtransformators TR sind, desto schneller steigt der Strom in der Sekundärwicklung an und desto geringer ist die von der Spannungsbegrenzung BGU aufzunehmende Energie. Wenn das Gerät eine sehr kleine Leistung überträgt, kann der von der Drosselspule L eingeprägte Stromimpuls kürzer sein als die vom Steuergerät STG festgelegte Einschaltdauer des elektronischen Schalters ES2. In diesem Fall kann sich ein unerwünschter, von der gleichgerichteten Netzspannung getriebener zusätzlicher Magnetisierungsstrom über die Primärwicklung des Anpaßtransformators TR ausbilden. Dies kann durch vorzeitiges Ausschalten des elektronischen Schalters ES2 verhindert werden. Ein Abschaltkriterium ist die Verringerung der Primärspannung an den Anpaßtransformatoren TR nach der Übertragung eines Stromimpulses. Generell genügt es zur Vermeidung unerwünschter Magnetisierungsströme bei der Übertragung sehr kleiner Leistungen, nach dem Spannungseinbruch an den Primärwicklungen alle elektronischen Schalter auszuschalten. Dies gilt auch für alle im weiteren beschriebenen Schaltungen.

Fig.1b zeigt ein Prinzipschaltbild der Grundschaltung zum Laden eines Akkumulators. Der Akkumulator AK ist an den Ausgangsklemmen KA+ und KA- des Anpaßnetzwerks AN angeschlossen. Wegen der im Vergleich zu Kondensatoren großen Kapazität von Akkumulatoren ändert sich die Spannung am Akkumulator AK nur sehr langsam. Deshalb genügt zur Steuerung des Ladevorgangs die Abfrage der Akkumulatorspannung mittels eines potentialtrennenden Spannungsmeßwertgebers MGU und deren Auswertung über einen Funktionsgeber FKT. Dieser gibt dem Steuergerät STG die Ladeleistung vor. Sie ist in der Regel ab dem Beginn des Ladevorgangs für längere Zeit maximal und nimmt mit Annäherung an die Ladeschlußspannung kontinuierlich ab. Die Steuerung der elektronischen Schalter ES1, ES2 und die Energieübertragung erfolgen in derselben Weise, wie es in der Erläuterung zu Fig.1a angegeben ist.

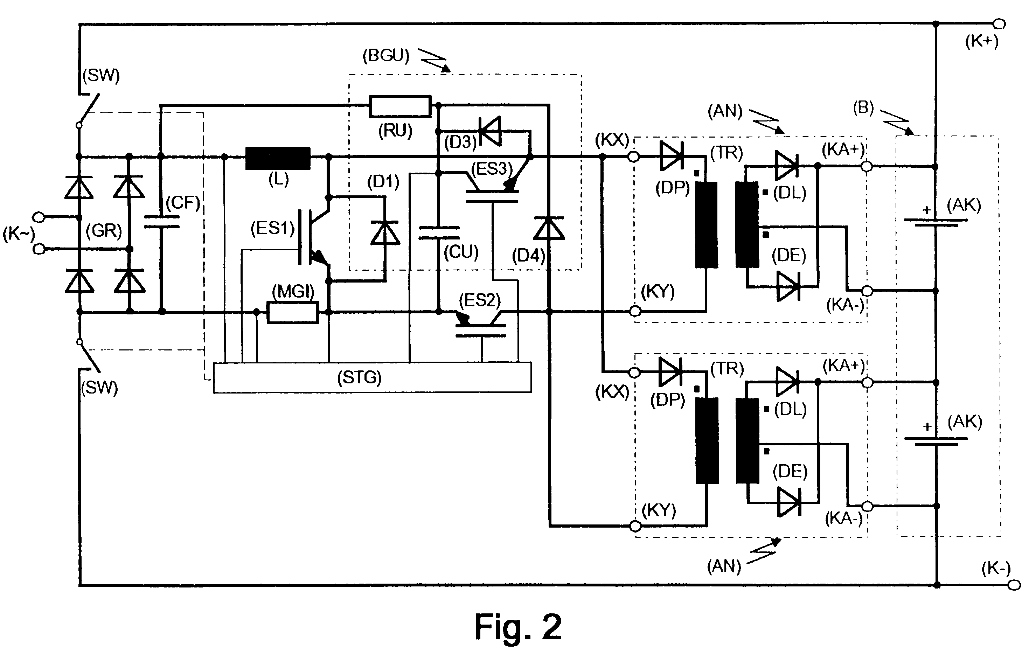

Fig.1c zeigt die prinzipielle Grundschaltung zum Laden mehrerer Akkumulatoren und zum Ladungsausgleich zwischen mehreren Akkumulatoren. Da jedem Akkumulator AK ein Anpaßnetzwerk AN mit einer von den Anpaßtransformatoren TR sichergestellten Potentialtrennung zugeordnet ist, spielt es keine Rolle, ob einzelne Akkumulatoren AK oder eine Reihenschaltung von Akkumulatoren AK oder eine Kombination aus einzelnen und in Reihe geschalteten Akkumulatoren AK geladen werden sollen. Dasselbe gilt für den Ladungsausgleich. In der Regel werden Batterien aus mehreren in Reihe geschalteten gleichartigen Akkumulatoren AK aufgebaut, was den Einsatz untereinander gleicher Anpaßnetzwerke AN rechtfertigt. In Fig.lc ist zur Vereinfachung eine Batterie B bestehend aus einer Reihenschaltung von zwei Akkumulatoren AK dargestellt. Jeder Akkumulator AK ist an ein aus einem Anpaßtransformator TR und den Sperrdioden DL und DE bestehendes Anpaßnetzwerk AN angeschlossen. Die Primärwicklungen der Anpaßtransformatoren TR sind an den Klemmen KX, KY und mit dem Stellerausgang parallelgeschaltet. Zum Laden der Akkumulatoren AK legt man bei geöffneten Schaltern SW an die Netzanschlußklemmen K- die Netzspannung an. Zur Erzielung eines Ladungsausgleichs während des Entladens der Batterie B oder bei Rekuperation sind die Netzanschlußklemmen K∼ offen und die Schalter SW geschlossen. In diesem Fall wird die Schaltung aus der Batterie B gespeist. Sowohl zum Laden der Batterie als auch zum Ladungsausgleich wird der aus einer Drosselspule L, den elektronischen Schaltern ES1 und ES2 und einer Spannungsbegrenzung BGU bestehende Steller entsprechend den Erläuterungen zu Fig.1a getaktet. Während der Entmagnetisierungsphase erzeugt jeder Anpaßtransformator TR kurzzeitig einen Strom, welcher zu dem am jeweiligen Anpaßnetzwerk angeschlossenen Akkumulator AK fließt. Sind die Anpaßnetzwerke AN untereinander gleich, so teilt sich der von der Drosselspule L eingeprägte Stromimpuls zunächst als Magnetisierungsstrom gleichmäßig auf jeden Anpaßtransformator TR auf. In demjenigen Anpaßnetzwerk AN, dessen zugeordneter Akkumulator AK die kleinere der beiden Akkumulatorenspannungen aufweist, wird die Sperrdiode DL zuerst leitend. Die Spannung dieses Akkumulators AK bestimmt dann die Primärspannung aller Anpaßtransformatoren TR mit der Folge, daß die Sperrdiode DL desjenigen Anpaßnetzwerkes AN, an dem der Akkumulator AK mit der größeren Spannung angeschlossen ist, gesperrt bleibt. Somit gelangt Energie aus der Drosselspule L über den zugeordneten Anpaßtransformator TR und die zugeordnete Sperrdiode DL nur zum Akkumulator AK mit der kleineren Spannung. Solange an einem Anpaßnetzwerk AN die Energie der von der Entmagnetisierung herrührenden Ströme kleiner ist als die während des Sperrens des elektronischen Schalters ES1 übertragene, wird im zeitlichen Mittel der Akkumulator AK mit der kleineren Spannung überwiegend mit Energie versorgt. Diese Bedingung läßt sich durch eine geeignete Dimensionierung der Anpaßtransformatoren TR und durch steuerungstechnische Maßnahmen erfüllen. Wenn beide Akkumulatorenspannungen gleich groß sind, leiten beide Sperrdioden DL gleichzeitig. Wenn die Anpaßnetzwerke AN untereinander gleich sind, fließt die Energie aus der Drosselspule L den Akkumulatoren AK in gleichen Teilen zu. Wenn an den Batterieanschlußklemmen K+ und Kein Verbraucher angeschlossen ist und keine Netzspannung anliegt, nimmt die Spannung am ladungsschwächeren Akkumulator AK schneller ab als am ladungsstärkeren. Wenn dann der Steller über die Schalter SW aus der Batterie B gespeist wird, gelangt die vom Steller der Batterie B entzogene Energie automatisch an den Akkumulator AK mit der kleinsten Spannung und reduziert damit im zeitlichen Mittel dessen Entladestrom, während der Entladestrom des Akkumulators AK mit der größeren Spannung vergrößert wird. Wenn die Batterie B über die Batterieanschlußklemmen K+ und K- Energie erhält (Rekuperation), nimmt die Spannung am kapazitätsarmen Akkumulator AK schneller zu als am kapazitätsreichen. In diesem Fall gelangt die vom Steller der Batterie B entzogene Energie automatisch zum kapazitätsreichen Akkumulator AK. Der kapazitätsarme Akkumulator AK nimmt im zeitlichen Mittel weniger Energie auf als der kapazitätsreiche. Wenn beim Entladen der Batterie B oder bei einer Rekuperation beide Akkumulatorenspannungen gleich sind, braucht man keinen Ladungsausgleich und man setzt die Schaltung still. Die Anpaßnetzwerke AN werden für die maximale Ladeleistung der einzelnen Akkumulatoren AK bemessen. Damit die Anpaßnetzwerke AN nicht überlastet werden, darf der Steller nur soviel Energie pro Zeiteinheit umsetzen wie es der Anzahl der Akkumulatoren AK mit kleinster Spannung entspricht. Zur Bestimmung ihrer Anzahl wird ein Funktionsblock ZMI benötigt, der die potentialtrennenden Spannungsmeßwertgeber MGU auswertet. Das Ausgangssignal des Funktionsblocks ZMI wirkt auf eine Begrenzung BGR. Sie reduziert die von einem Funktionsgeber FKT aus der Batteriespannung ermittelte Übertragungsleistung auf das zulässige Maß. Die Batteriespannung wird mit einem Summierer SUM aus allen Akkumulatorenspannungen gebildet. Zur Vermeidung von unerwünschten Ausgleichsströmen zwischen den Primärwicklungen können ohne Funktionseinbußen in Reihe zu den Primärwicklungen Dioden als weitere Bestandteile der Anpaßnetzwerke eingefügt werden (vgl. Fig.2).

Fig.2 zeigt ein Ausführungsbeispiel der in Fig.1c gezeigten Grundschaltung, gemäß dem zur Unterdrückung von unerwünschten Ausgleichsströmen zwischen den Anpaßtransformatoren TR Reihendioden DP zu den Primärwicklungen geschaltet sind. Den Strommeßwertgeber MGI bildet ein einfacher Widerstand. Damit die vom Taktbetrieb der Steuerung verursachten höherfrequenten Drosselstrom- Anteile nicht über die Netzleitungen fließen, ist parallel zum Gleichrichter GR ein Filterkondensator CF eingefügt. Die unvermeidlichen Streuinduktivitäten der Anpaßtransformatoren TR verzögem beim Sperren des elektronischen Schalters ES1 den Übergang des Stromimpulses aus der Drosselspule L auf die Anpaßtransformatoren TR. Während dieser Verzögerungszeit übemimmt die Spannungsbegrenzung BGU den Differenzstrom: Er fließt über deren Hauptbestandteile, die Diode D3 und den Kondensator CU. Die Differenzströme laden den Kondensator CU allmählich auf, so daß zur Gewährleistung einer definierten Spannung am Kondensator CU eine Entladeschaltung erforderlich ist. Sie besteht entweder aus einem Entladewiderstand RU, über den ein Teil der auf dem Kondensator CU zwischengespeicherten Energie am Gleichrichter GR wieder zurückgewonnen werden kann, oder aus dem elektronischen Schalter ES3 oder aus einer Kombination von beiden. Mit dem elektronischen Schalter ES3 kann die auf dem Kondensator CU zwischengespeicherte Energie vollständig zurückgewonnen werden. Er wird zusammen mit dem elektronischen Schalter ES2 immer dann eingeschaltet, wenn die Drosselspule L einen Stromimpuls einprägt. Solange die Diode D3 Strom führt, wird der Kondensator CU (ausgehend von einer vorgegebenen Mindestspannung) geladen, und der elektronische Schalter ES3 ist überbrückt. Sobald die Diode D3 sperrt, kann sich der Kondensator CU über den elektronischen Schalter ES3 und über die Primärwicklungen der Anpaßnetzwerke AN entladen, wobei die Kondensatorenergie dem Akkumulator AK mit der kleinsten Spannung zukommt. Wenn die Spannung am Kondensator CU die vorgegebene Mindestspannung unterschreitet, wird der elektronische Schalter ES3 ausgeschaltet. Die Dioden D1, D4 gewährleisten einen Strompfad zur Entmagnetisierung der Primarstreuinduktivitäten der Anpaßtransformatoren TR beim Ausschalten des elektronischen Schalters ES2. In der Praxis sind diese Dioden meist nicht notwendig, da die in den Primärstreuinduktivitäten der Anpaßtransformatoren TR gespeicherte Energie so gering ist, daß sie von den Wicklungskapazitäten aufgenommen wird. Zur Vereinfachung ist in Fig.2 und in allen weiteren Figuren nur das Steuergerät angedeutet. Die aus Fig.1c bekannten Komponenten zur Bestimmung der zu übertragenden Leistung sind weggelassen.

Gemäß dem im Prinzipschaltbild Fig.3 dargestellten Ausführungsbeispiel ist ein Steller mit vier elektronische Schaltern ES1, ES2, ES3, ES4 in Brückenschaltung vorgesehen. Damit kann man die Stromflußrichtung durch die Primärwicklungen vorgeben und auf die Betriebsweise der Anpaßtransformatoren TR Einfluß nehmen. Die Taktung der elektronischen Schalter erfolgt analog zu den Erläuterungen zu Fig.1a mit dem Unterschied, daß immer mindestens zwei elektronische Schalter eingeschaltet sind. Wenn die Anpaßtransformatoren TR während des Ladens der Drosselspule L entmagnetisiert werden sollen, sind entweder die elektronischen Schalter ES1 und ES3 oder die elektronischen Schalter ES2 und ES4 ein- und die beiden anderen auszuschalten. Wenn alle elektronischen Schalter nur eine Stromrichtung zulassen und Sperrspannungen in beiden Richtungen aufnehmen können, dann ist eine Leitung zu den an den Klemmen KX und KY parallel geschalteten Anpaßnetzwerken AN unterbrochen, so daß die zuvor in den Primärwicklungen fließenden Magnetisierungsströme in die Sekundärwicklungen kommutieren und die in den Kernen der Anpaßtransformatoren TR gespeicherte magnetische Energie zu den Akkumulatoren AK gelangt. Nach dem Laden der Drosselspule L wird ein zu den Klemmen KX fließender Stromimpuls erzeugt, indem die elektronischen Schalter ES1 und ES4 ein- und die anderen ausgeschaltet werden. Wenn die elektronischen Schalter ES2 und ES3 ein- und die anderen ausgeschaltet sind, entsteht- ein zu den Klemmen KY fließender Stromimpuls. Wenn man bei jeder Taktperiode das Vorzeichen des Stromimpulses ändert, werden beide Wicklungshälften der Sekundärwicklungen eines Anpaßtransformators TR und die Sperrdioden DL im zeitlichen Mittel gleichmäßig belastet. Dies wird durch eine einheitliche Bezeichnung der Sperrdioden DL ausgedrückt. Der Gegentaktbetrieb der Anpaßtransformatoren TR ist dadurch gekennzeichnet, daß sich die Magnetisierung der Transformatorkeme nur während der Übertragung eines Stromimpulses ändert. Sonst bleibt die Magnetisierung der Anpaßtransformatoren TR näherungsweise konstant. Dies wird erreicht, wenn man während des Ladens der Drosselspule L alle Primärwicklungen durch Einschalten aller elektronischen Schalter kurzschließt. Damit in den Primärwicklungen Kurzschlußströme mit unterschiedlichem Vorzeichen möglich sind, müssen alle elektronischen Schalter jederzeit einen Strom beliebigen Vorzeichens führen können. Dies kann immer mit einer zum jeweiligen elektronischen Schalter antiparallel geschalteten Diode erreicht werden. Im Gegentaktbetrieb werden die Anpaßtransformatoren TR während der Übertragung von Stromimpulsen ummagnetisiert, wobei insgesamt im Vergleich zum Betrieb mit Entmagnetisierung der doppelte Induktionshub ausgenutzt werden kann. Dies erlaubt den Einsatz kleinerer Transformatorkerne. Die Spannungsbegrenzung BGU kann alternativ auch parallel zu den Klemmen KX und KY angeordnet sein, wenn sie eine Spannung mit unterschiedlichem Vorzeichen begrenzen kann.

Die Schaltung nach Fig.4 enthält einen Steller, der gegenüber der Grundschaltung eine weitere, mit dem elektronischen Schalter ES3 versehene Ausgangsleitung hat. Die Primärwicklungen der Anpaßtransformatoren TR sind mit jeweils einer Mittelanzapfung versehen, die an die Klemmen KX führen. Die Enden der Primärwicklungen können zur Vermeidung von Ausgleichsströmen zwischen den Anpaßtransformatoren TR jeweils mit einer Reihendiode DP an die Klemmen KY und KZ der Anpaßnetzwerke AN geführt sein. An den Klemmen KX, KY, KZ sind alle Anpaßnetzwerke AN parallelgeschaltet. Die Drosselspule L wird durch Einschalten des elektronischen Schalters ES1 geladen. Der beim Ausschalten des elektronischen Schalters ES1 von der Drosselspule L eingeprägte Stromimpuls fließt zu den Klemmen KX sowie von dort entweder über eine Hälfte der Primärwicklungen zu den Klemmen KY und über den elektronischen Schalter ES2 (ES3 sperrt) oder über die andere Hälfte der Primärwicklungen, die Klemmen KZ und den elektronischen Schalter ES3 (ES2 sperrt), wobei das Vorzeichen der Magnetisierung der Transformatorkerne jeweils unterschiedlich ist. Die magnetische Kopplung zwischen den beiden Hälften der einzelnen Primärwicklungen verursacht an dem nicht am Stromfluß beteiligten elektronischen Schalter eine Sperrspannung, die doppelt so groß ist, wie die an der Spannungsbegrenzung BGU eingestellte Spannung. Sollen die Kerne der Anpaßtransformatoren TR während der Einschaltdauer des elektronischen Schalters ES1 entmagnetisiert werden, bleiben während dieser Zeit die elektronischen Schalter ES2 und ES3 ausgeschaltet. Wenn man auf die Reihendioden DP verzichtet, dürfen die elektronischen Schalter ES2, ES3 nur eine Stromflußrichtung zulassen und müssen Sperrspannungen mit unterschiedlichem Vorzeichen aufnehmen können. Wenn der elektronische Schalter ES1 immer einen Inversstrom zuläßt, erreicht man den bereits beschriebenen Gegentaktbetrieb, indem man während des Ladens der Drosselspule L alle elektronischen Schalter einschaltet.

Gemäß der Schaltung nach Fig.5 wird die Übertragungsleistung auf zwei Steller aufgeteilt. Sie bestehen aus dem elektronischen Schalter ES1, der Drosselspule L1 und der Spannungsbegrenzung BGU1 bzw. aus dem elektronischen Schalter ES2, der Drosselspule L2 und der Spannungsbegrenzung BGU2. Beide beziehen ihre Energie vom Gleichrichter GR oder, wenn die Schalter SW geschlossen sind, aus der Batterie B. Die Drosselspulen L1, L2 werden jeweils für die halbe Geräteleistung bemessen. Wenn der elektronische Schalter ES1 aus- und der elektronische Schalter ES2 eingeschaltet ist, prägt die Drosselspule L1 einen Stromimpuls ein, der zu den Klemmen KX, über die Primärwicklungen und die Klemmen KY der Anpaßnetzwerke AN sowie über den elektronischen Schalter ES2 fließt. Gleichzeitig wird die Drosselspule L2 geladen. Wenn der elektronische Schalter ES2 aus- und der elektronische Schalter ES1 eingeschaltet ist, fließt der von der Drosselspule L2 eingeprägte Stromimpuls in umgekehrter Richtung, wobei die Drosselspule L1 geladen wird. Sind alle elektronischen Schalter eingeschaltet, werden beide Drosselspulen L1, L2 geladen und die Klemmen KX und KY sind kurzgeschlossen. Das Ausschalten beider elektronischer Schalter ist nur in Sonderfällen (z. B. Übertragung sehr kleiner Leistung, Störfälle) sinnvoll. Wenn man für die elektronischen Schalter ES1, ES2 dasselbe Verhältnis von Einschalt- zu Ausschaltzeit vorgibt und die Taktzyklen um 180° gegeneinander versetzt, wirkt auf die an den Klemmen KX und KY parallelgeschalteten Anpaßnetzwerke AN während einer Taktperiode nacheinander ein positiver Stromimpuls, ein Kurzschluß, ein negativer Stromimpuls und ein weiterer Kurzschluß. Wegen der Kurzschlußphasen ist nur Gegentaktbetrieb möglich. Dazu müssen beide elektronischen Schalter im eingeschalteten Zustand einen Strom beliebigen Vorzeichens führen können. Zur Erfüllung dieser Bedingung können den elektronischen Schaltem antiparallel geschaltete Dioden D1 und D2 beigefügt werden. Sind die Induktivitäten der Drosselspulen L1, L2 und die Taktfrequenz gleich groß wie bei den Schaltungen nach Fig.1a/1b/1c bis Fig.4, ergibt sich bei der Schaltung nach Fig.5 infolge der versetzten Taktung ein günstigeres Spektrum für die Störwelligkeit des Netzstroms. Dies reduziert den Aufwand an Filtermaßnahmen. Alternativ kann bei gegebener zulässiger Störwelligkeit des Netzstroms die Induktivität der Drosselspulen L1, L2 geringer eingestellt werden. Anstelle der beiden Spannungsbegrenzungen BGU1, BGU2 kann alternativ auch parallel zu den Klemmen KX und KY eine Spannungsbegrenzung angeordnet sein, die eine Spannung mit unterschiedlichem Vorzeichen begrenzen kann. Wenn man eine der Leitungen zu den Klemmen KX und KY mit elektronischen Schaltern abschaltbar macht, kann die bei der Schaltung nach Fig.6 beschriebene Teilentmagnetisierung durchgeführt werden.

Die Schaltung nach Fig.6 enthält zwei Steller mit je einem geschalteten Ausgang. Sie bestehen aus den elektronischen Schaltern ES1, ES3, der Drosselspule L1 und der Spannungsbegrenzung BGU1 bzw. aus den elektronischen Schaltern ES2, ES4, der Drosselspule L2 und der Spannungsbegrenzung BGU2 und beziehen beide ihre Energie über den Gleichrichter GR vom Netz oder, wenn die Schalter SW geschlossen sind, aus der Batterie B. Die Anpaßtransformatoren TR der Anpaßnetzwerke AN weisen jeweils zwei getrennte Primärwicklungen auf, wobei jede einem Steller zugeordnet ist. Jeder Primärwicklung kann eine Reihendiode DP zur Unterdrückung von Ausgleichsströmen zwischen den Anpaßtransformatoren TR zugeordnet werden. Wenn die elektronischen Schalter ES1 und ES4 aus- und die elektronischen Schalter ES2 und ES3 eingeschaltet sind, prägt die Drosselspule L1 einen Stromimpuls ein, der zu den Klemmen KX1 aller Anpaßnetzwerke AN und von dort über die Klemmen KY1 sowie über den elektronischen Schalter ES3 fließt, wobei gleichzeitig die Drosselspule L2 geladen wird. Wenn die elektronischen Schalter ES2 und ES3 aus- und die elektronischen Schalter ESI und ES4 eingeschaltet sind, prägt die Drosselspule L2 einen Stromimpuls ein, der zu den Klemmen KX2 aller Anpaßnetzwerke AN und von dort über die Klemmen KY2 sowie über den elektronischen Schalter ES4 fließt, wobei gleichzeitig die Drosselspule L1 geladen wird. Wenn ein Stromimpuls eingeprägt wird, gelangt Energie in der schon beschriebenen Weise zu dem Akkumulatoren AK mit der kleinsten Spannung. Die beiden Steller werden um 180° versetzt getaktet. Wenn die Ladezeit für eine Drosselspule größer ist als die Übertragungsdauer eines Stromimpulses, gibt es zwischen den Intervallen, in denen eine der beiden Drosselspulen einen Stromimpuls einprägt, immer Zeitabschnitte, in denen beide Drosseispulen gleichzeitig geladen werden, wobei die Schaltzustände der elektronischen Schalter ES2 und ES4 darüber entscheiden, ob entweder zur Verwirklichung des Gegentaktbetriebs ein Kurzschluß zwischen den Klemmen KX1 und KY1 bzw. KX2 und KY2 stattfindet oder ob eine Teilentmagnetisierung der Transformatorkerne erfolgt. Sind die elektronischen Schalter ES2 und ES4 während dieser Zeit eingeschaltet und erlauben die elektronischen Schalter ES1 und ES2 einen Inversstrom, können die Ströme in den Primärwicklungen in Kurzschlußkreisen weiterfließen. Sind die elektronischen Schalter ES2 und ES4 dagegen ausgeschaltet, erfolgt eine Teilentmagnetisierung der Transformatorkerne über die Sekundärwicklungen, wobei die elektronischen Schalter ES2 und ES4 bei Verzicht auf die Reihendioden DP nur eine Stromflußrichtung zulassen dürfen und Sperrspannungen in beiden Richtungen aufnehmen müssen. Bevor eine vollständige Entmagnetisierung der Transformatorkerne erfolgt, verursacht die versetzte Taktung der Steller eine Übertragung eines weiteren Stromimpulses und damit eine Ummagnetisierung der Transformatorkerne ausgehend von dem am Ende der Teilentmagnetisierung erreichten Magnetisierungszustand. Die von den Drosselspulen L1 und L2 eingeprägten Stromimpulse verursachen jeweils eine unterschiedliche Durchflutungsrichtung der Primärwicklungen, so daß alle Wicklungen eines Anpaßtransformators TR und die zugehörigen Sperrdioden DL im zeitlichen Mittel gleichmäßig belastet werden.

Fig.7 zeigt ein Prinzipschaltbild für ein Gerät mit dreisträngigem Netzanschluß. Es besteht aus einer Anordnung von zwei Grundschaltungen nach Fig.lb. Zur Vereinfachung wurde nur ein Akkumulator AK dargestellt, der mit den Ausgangsklemmen KA+ und KA- eines jeden Anpaßnetzwerks AN verbunden ist. Zur Versorgung weiterer Akkumulatoren kann jede Grundschaltung mehrere Anpaßnetzwerke haben. Die Gleichrichter GR werden über drei Netzanschlußklemmen K1∼, K2∼, K3∼ an das Drehstromnetz angeschlossen, wobei eine Netzanschlußklemme beiden Gleichrichtern GR gemeinsam ist. In Fig.7 ist dies die Netzanschlußklemme K2∼. Die beiden Grundschaltungen arbeiten somit an Netzspannungen, die jeweils um 120° gegeneinander phasenverschoben sind. Die von den Gleichrichtern GR aufgenommenen Netzströme werden von den Steuergeräten STG phasengleich zu diesen Netzspannungen eingestellt. Wenn der Netzmittelpunkt nicht angeschlossen ist, stellen sich alle Netzströme sinusförmig ein. Die Amplitude aller Netzströme wird von dem Funktionsblock FKT in Abhängigkeit von der mit dem Spannungsmeßwertgeber MGU ermittelten Spannung des Akkumulators AK vorgegeben. Im allgemeinen stellt sich ein symmetrisches Drehstromsystem ein, wenn jede Grundschaltung dieselbe Leistung überträgt. Anstelle der Grundschaltungen kann jede der in Fig.3 bis Fig.6 dargestellten Anordnungen eingesetzt werden.

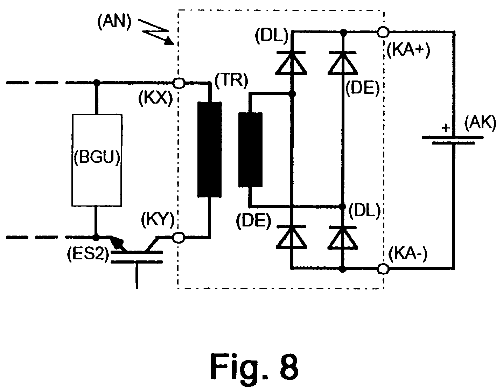

Fig.8 zeigt ein Anpaßnetzwerk AN, welches im Vergleich zu den bisher dargestellten Anpaßnetzwerken einen Anpaßtransformator TR mit nur einer Sekundärwicklung und am Ausgang eine Brückenschaltung aus je zwei Sperrdioden DL ("Ladedioden") und DE ("Entmagnetisierungsdioden") enthält. Der Steller und ein Akkumulator AK sind wie in Fig.1b an die Klemmen KX, KY bzw. KA+, KA- des Anpaßnetzwerks AN angeschlossen. Zur Vereinfachung sind in Fig.8a nur die für den Anschluß des Anpaßnetzwerks AN notwendigen Komponenten des Stellers dargestellt. Mit Ausnahme der doppelten Durchlaßspannung der Brückenschaltung ist das Anpaßnetzwerk AN nach Fig.8 mit den in Fig.1a/1b/1c gezeigten Anpaßnetzwerken AN gleichwertig. In den Schaltungen nach Fig.3 bis Fig.6 können Anpaßnetzwerke AN eingesetzt werden, welche bezüglich der Sekundärwicklung und der Sperrdioden DL, DE mit Fig.8 übereinstimmen, wobei wegen der gleichmäßigen Strombelastung eine Unterscheidung der einzelnen Sperrdioden untereinander entfällt.

## Patentansprüche

1. **Getaktetes Stromversorgungsgerät**
für einen ein- oder mehrsträngigen Netzanschluß mit
- mindestens einem eingangsseitigen Gleichrichter,
- mindestens einem Steller zur Erzeugung einer Folge von Stromimpulsen,
- mindestens zwei Anpaßnetzwerken zur potentialgetrennten Übertragung der Stromimpulse,
- je einem Paar von Ausgangsklemmen je Anpaßnetzwerk, an dem ein spannungsbestimmendes Element beispielsweise ein Akkumulator oder ein Kondensator angeschlossen ist
- und einem Steuergerät,
wobei jedes Anpaßnetzwerk (AN) aus einem Anpaßtransformator (TR) und mehreren Sperrdioden (DL, DE) besteht, welche die Ausgangsklemmen (KA+, KA-) des Anpaßnetzwerks (AN) mit dem sekundären Wicklungssystem des Anpaßtransformators (TR) verbinden,
und wobei die Primärwicklungssysteme sämtlicher Anpaßnetzwerke (AN) miteinander parallel geschaltet sind,
und wobei ein aus mindestens einer Drosselspule (L) und mindestens einem Paar von elektronischen Schaltern (ES1, ES2), die vom Steuergerät (STG) angesteuert werden, und einer nur während Übergangsvorgängen wirksamen Spannungsbegrenzung (BGU) bestehender Steller zwischen Gleichrichter (GR) und den Anpaßnetzwerken (AN) angeordnet ist, der entweder aus der gleichgerichteten Netzspannung oder einer vorzugsweise über Schalter (SW) zugeschalteten Gleichspannungsquelle eine Folge von Stromimpulsen generiert, deren Energie infolge der unterschiedlichen transformatorischen Rückwirkungen der an den Ausgangsklemmen (KA+, KA-) der einzelnen Anpaßnetzwerke (AN) anliegenden Spannungen auf die Primärspannung der Anpaßtransformatoren (TR) nur zu denjenigen Ausgängen fließt, an denen die kleinste Spannung anliegt, und deren Energie bei Spannungsgleichheit an allen Ausgängen in gleichen Teilen zu allen Ausgängen fließt, und wobei das Steuergerät (STG) die Steuerbefehle für die elektronischen Schalter (ES1, ES2) so erzeugt, daß im Betneb am Netz ein sinusförmig ausgeprägter Netzstrom fließt, und daß im Betrieb an Gleichspannung ein geglätteter Strom von der Gleichspannungsquelle bezogen wird,
und wobei dem Steuergerät (STG) die zu übertragende Leistung in Abhängigkeit von einer in einem Funktionsgeber (FKT) abgelegten Charakteristik und von der Anzahl an Ausgangskanälen mit minimaler Spannung vorgegeben wird.

2. **Getaktetes Stromversorgungsgerät nach Anspruch 1**
dadurch gekennzeichnet,
daß die über die Schalter (SW) zugeschaltete Gleichspannungsquelle aus der Serienschaltung von mindestens zwei an den Ausgängen der Anpaßnetzwerke angeschlossenen spannungsbestimmenden Elementen besteht.

3. **Getaktetes Stromversorgungsgerät nach einem der Ansprüche 1 bis 2**
dadurch gekennzeichnet,
daß die Drosselspule (L) am Gleichrichter (GR) und einer aus vier elektronischen Schaltern (ES1, ES2, ES3, ES4) aufgebauten Brückenschaltung angeschlossen ist.

4. **Getaktetes Stromversorgungsgerät nach Ansprüche 1 bis 2**
dadurch gekennzeichnet,
daß die Primärwicklung der Anpaßtransformatoren (TR) eine Mittelanzapfung aufweist, und daß der Steller drei elektronische Schalter (ES1, ES2, ES3) enthält.

5. **Getaktetes Stromversorgungsgerät nach einem der Ansprüche 1 bis 2**
dadurch gekennzeichnet,
daß zwei Drosselspulen (L1, L2) vorgesehen sind, die einerseits beide mit einem Pol des Gleichrichters (GR) und andererseits jeweils mit einem der beiden Anschlüsse der Primärwicklungen der Anpaßtransformatoren (TR) und mit einem elektronischen Schalter (ES1, ES2) verbunden sind, und daß der zweite Anschluß der beiden elektronischen Schalter zum anderen Pol des Gleichrichters (GR) führt.

6. **Getaktetes Stromversorgungsgerät nach Anspruch 5**
dadurch gekennzeichnet,
daß die Anpaßtransformatoren (TR) zwei Primärwicklungen haben, die jeweils einerseits mit einer der beiden Drosselspulen (L1, L2) und einem elektronischen Schalter (ES1, ES2) verbunden sind und die andererseits über elektronische Schalter (ES3, ES4) an den anderen Pol des Gleichrichters geschaltet werden können.

7. **Getaktetes Stromversorgungsgerät nach einem der Ansprüche 1, 2, 4, 6**
dadurch gekennzeichnet,
daß Reihendioden (DP) in Serie mit jedem Strang der Primärwicklung eines Anpaßtransformators (TR) geschaltet sind.

8. **Getaktetes Stromversorgungsgerät nach einem der Ansprüche 1 bis 7 zur Verwendung für einen dreisträngigen Netzanschluß**
dadurch gekennzeichnet,
daß zwei der aus mindestens einem Anpaßnetzwerk (AN), einem Gleichrichter (GR) und einem Steller bestehende Schaltungen ausgangsseitig parallel geschaltet sind,
daß je ein Wechselspannungsanschluß eines der beiden Gleichrichter (GR) mit einem Strang eines Drehspannungssystems verbunden ist,
daß die beiden weiteren Anschlüsse der Gleichrichter (GR) mit dem dritten Strang des Drehspannungssystems verbunden sind,
und daß die Netzströme der Gleichrichter durch die beiden Steuergeräte (STG) in Abhängigkeit von den an den Gleichrichtern (GR) anliegenden Netz-Leiterspannungen so geführt werden, daß sie in Phase zur den Netz-Leiterspannungen verlaufen.

## Claims

1. **Switched-Mode Power Supply Unit**
for either single-phase or multi-phase mains connection comprising of
at least one inputside rectifier,
at least one converter for generating a sequence of current pulses,
at least two output circuits for potential-separated transmission of the current pulses,
one pair of output terminals at each output circuit, to which a voltage-determining element (battery, capacitor) is connected,
and a controller,
wherein each output circuit (AN) consists of one voltage adjusting transformer (TR) and a plurality of blocking diodes (DL, DE) connecting the output terminals (KA+, KA-) to the secondary winding system of said voltage adjusting transformer (TR),
and wherein the primary winding systems of all output circuits are parallel-connected to each other,
and wherein said converter includes at least one inductor (L), at least one pair of electronic switches (ES1, ES2) and a voltage limiter (BGU) effective only during transients, said converter connecting the rectifier (GR) to the output circuits (AN), said electronic switches being triggered by the controller (STG) and said voltage limiter (BGU) being connected to the output terminals of the converter,
and wherein said converter generates a sequence of current pulses either from the rectified line voltage or from a direct-voltage source, said direct-voltage source being switched on to the converter preferably by switches (SW),
and wherein the energy of said sequence of current pulses flows only to those outputs that carry the lowest voltage, and whose energy flows at equality of all output voltages at equal parts to all outputs due to different transformer reactions of the output voltages prevailing across the output terminals (KA+, KA-) of the output circuits (AN) on the primary voltage of all voltage adjusting transformers (TR),
and wherein the controller (STG) generates switching commands for the electronic switches (ES1,ES2) in such a way that in mains operation a sinusoidal mains current flows while in direct-voltage operation a smoothed current is drawn from the direct-voltage source,
and wherein the power to be transmitted is specified for said controller (STG) dependent on a characteristic stored in a function generator (FKT) and on the number of output channels carrying the minimum voltage.

2. **Switched-Mode Power Supply Unit as in Claim 1 characterised in**
that said direct-voltage source cut in by said switches (SW) includes a series wiring of at least two voltage determining elements connected to outputs of said output circuits (AN).

3. **Switched-Mode Power Supply Unit as in Claims 1 and 2 characterised in**
that the inductor (L) is connected to the rectifier (GR) and to a bridge circuit consisting of four electronic switches (ES1, ES2, ES3, ES4).

4. **Switched-Mode Power Supply Unit as in Claims land 2 characterised in**
that the primary windings of the voltage adjusting transformers (TR) have a center tap and the converter includes three electronic switches (ES1, ES2, ES3).

5. **Switched-Mode Power Supply Unit as in Claims 1 and 2 characterised in**
that two inductors (L1, L2) are included, one of their two leads being connected to one pole of the rectifier (GR) and each of the remaining leads being connected to one terminal of the primary windings of said voltage adjusting transformers (TR) as well as to one terminal of said electronic switches (ES1, ES2), the remaining terminals of the electronic switches (ES1, ES2) being connected to the other pole of the rectifier (GR).

6. **Switched-Mode Power Supply Unit as in Claim 5 characterised in**
that each of the voltage adjusting transformers (TR) carry two primary windings, one terminal of them being connected to one of said two inductors (L1, L2) as well as to one of said electronic switches (ES1, ES2) and the other terminal leading to one of two additional electronic switches (ES3, ES4) which allow switching to the other pole of said rectifier (GR).

7. **Switched-Mode Power Supply Unit as in Claims 1, 2, 4, 6 characterised in**
that each primary winding of said voltage-adjusting transformers (TR) and a diode (DP) are connected in series.

8. **Switched-Mode Power Supply Unit as in Claims 1 through 7 to be used for Three-Phase Mains Connection characterised in**
that two circuits consisting of at least one output circuit (AN), one rectifier (GR) and one converter are parallel-wired at the output sides,
that one alternating-current terminal of each of the rectifiers (GR) connects to one leg of a three-phase voltage source,
that the other terminals of said two rectifiers (GR) connect to the third leg of the three-phase voltage source,
and that the line currents flowing into the rectifiers (GR) are managed by two of said controllers (STG) in such a way that they are in phase with the voltages prevailing across the mains.

## Revendications

1. Appareil d'alimentation en courant à impulsions, pour un raccordement au secteur à une ou plusieurs phases, avec
- au moins un redresseur du côté d'entrée,
- au moins un régulateur pour produire une succession d'impulsions de courant,
- au moins deux réseaux adaptateurs pour transmettre les impulsions de courant avec séparation de potentiel,
- une paire respective de bornes de sortie pour chaque réseau adaptateur, à laquelle est raccordée un élément déterminant la tension, par exemple un accumulateur ou un condensateur,
- et un appareil de commande,
chaque réseau adaptateur (AN) étant constitué d'un transformateur d'adaptation (TR) et de plusieurs diodes de blocage (DL, DE), qui relient les bornes de sortie (KA+, KA-) du réseau adaptateur (AN) au bobinage secondaire du transformateur d'adaptation (TR),
et les bobinages primaires des différents réseaux adaptateurs (AN) étant mutuellement reliés en parallèle,
et un régulateur, constitué d'au moins une bobine de self (L) et au moins une paire de commutateurs électroniques (ES1, ES2) qui sont asservis par l'appareil de commande (STG), et d'une limitation de tension (BGU) active seulement pendant les processus de transition, étant disposé entre le redresseur (GR) et les réseaux adaptateurs (AN), régulateur qui produit, à partir de la tension redressée du secteur ou d'une source de tension continue enclenchée de préférence par l'intermédiaire de commutateurs (SW), une succession d'impulsions de courant dont l'énergie, par suite des différentes réactions de transformation, sur la tension primaire des transformateurs d'adaptation (TR), des tensions appliquées aux bornes de sortie (KA+, KA-) des réseaux adaptateurs individuels (AN), ne s'écoule que vers les sorties auxquelles est appliquée la plus petite tension, tandis qu'en cas d'égalité de tension à toutes les sorties, ladite énergie s'écoule en parts égales vers toutes les sorties,
et l'appareil de commande (STG) produisant les ordres de commande pour les commutateurs électroniques (ES1, ES2) de telle sorte qu'en fonctionnement sur le secteur, un courant secteur de forme sinusoïdale prononcée s'écoule, tandis qu'en fonctionnement sur tension continue, un courant lissé est tiré de la source de tension continue,
et la puissance à transmettre étant prédéfinie à l'appareil de commande (STG) en fonction d'une caractéristique déposée dans un générateur de fonction (FKT) et du nombre de canaux de sortie à tension minimale.

2. Appareil d'alimentation en courant à impulsions selon la revendication 1, caractérisé en ce que la source de tension continue enclenchée par l'intermédiaire des commutateurs (SW) est constituée du montage en série d'au moins deux éléments déterminant la tension qui sont raccordés aux sorties des réseaux adaptateurs.

3. Appareil d'alimentation en courant à impulsions selon la revendication 1 ou 2, caractérisé en ce que la bobine de self (L) est raccordée au redresseur (GR) et à un montage en pont constitué de quatre commutateurs électroniques (ES1, ES2, ES3, ES4).

4. Appareil d'alimentation en courant à impulsions selon la revendication 1 ou 2, caractérisé en ce que le bobinage primaire des transformateurs d'adaptation (TR) présente une prise centrale, et en ce que le régulateur contient trois commutateurs électroniques (ES1, ES2, ES3).

5. Appareil d'alimentation en courant à impulsions selon la revendication 1 ou 2, caractérisé en ce que deux bobines de self (L1, L2) sont prévues, qui sont reliées d'une part toutes deux à un pôle du redresseur (GR) et d'autre part respectivement à un des deux branchements des bobinages primaires des transformateurs d'adaptation (TR) et à un commutateur électronique (ES1, ES2), et en ce que le deuxième branchement des deux commutateurs électroniques mène à l'autre pôle du redresseur (GR).

6. Appareil d'alimentation en courant à impulsions selon la revendication 5, caractérisé en ce que les transformateurs d'adaptation (TR) possèdent deux bobinages primaires qui, d'une part, sont respectivement reliés à une des deux bobines de self (L1, L2) et à un commutateur électronique (ES1, ES2) et qui, d'autre part, peuvent être connectés par l'intermédiaire de commutateurs électroniques (ES3, ES4) sur l'autre pôle du redresseur.

7. Appareil d'alimentation en courant à impulsions selon une des revendications 1, 2, 4 ou 6, caractérisé en ce que des diodes série (DP) sont montées en série avec chaque phase du bobinage primaire d'un transformateur d'adaptation (TR).

8. Appareil d'alimentation en courant à impulsions selon une des revendications 1 à 7, à utiliser pour un raccordement au secteur à trois phases, caractérisé en ce que deux montages, constitués d'au moins un réseau adaptateur (AN), d'un redresseur (GR) et d'un régulateur, sont montés en parallèle du côté de sortie,
en ce qu'un branchement de tension alternative de chacun des deux redresseurs (GR) est relié à une phase respective d'un système de tension triphasée,
en ce que les deux autres branchements des redresseurs (GR) sont reliés à la troisième phase du système de tension triphasée,
et en ce que les courants de secteur des redresseurs sont, par les deux appareils de commande (STG), dirigés en fonction des tensions entre phases du secteur appliquées aux redresseurs (GR) de telle sorte qu'ils s'écoulent en phase avec les tensions entre phases du secteur.
